# EUROPEAN PATENT APPLICATION

(11) **EP 4 140 965 A1**
(43) Date of publication of application: **01.03.2023**
(21) Application number: 21793288.8
(22) Date of filing: 20.04.2021
(51) Int. Cl.: C03C 27/12, B32B 17/10, B32B 27/30, B32B 27/36, C08F 8/00, C08F 16/38

(54) **INTERLAYER FILM FOR LAMINATED GLASS, AND LAMINATED GLASS**

(30) Priority: 21.04.2020 JP 2020075748
(71) Applicant: SEKISUI CHEMICAL CO., LTD., Osaka-shi Osaka 530-8565 (JP)
(72) Inventor: TERAGUCHI, Yumiko, Mishima-gun, Osaka 618-0021 (JP); OOHIGASHI, Yuji, Mishima-gun, Osaka 618-0021 (JP)
(74) Representative: Ter Meer Steinmeister & Partner
(86) International application number: PCT/JP2021/016103
(87) International publication number: WO 2021/215455

(57) **Abstract**

An interlayer film for laminated glass, comprising a first layer containing a polyvinyl acetal-based resin, wherein the first layer contains no plasticizer or contains a plasticizer in an amount of 15 parts by mass or less based on 100 parts by mass of the resin contained in the first layer, and the first layer has a glass transition temperature (Tg) of 50°C or lower.

## Description

### Technical Field

The present invention relates to an interlayer film for laminated glass and a laminated glass having the interlayer film for laminated glass.

### Background Art

Polyvinyl acetal-based resins are widely used in interlayer films for laminated glass in laminated glass. Laminated glass has two glass plates and an interlayer film for laminated glass disposed between the two glass plates, and the two glass plates are integrated by the interlayer film for laminated glass. Laminated glass is widely used in automobiles, railway vehicles, aircraft, ships, buildings, and others because, even when it is broken by an external impact, the amount of flying pieces of broken glass is small, and it provides excellent safety.

As the glass plate in laminated glass, in general, inorganic glass is widely used, but inorganic glass has problems such as heavy weight and occurrence of cracks when subjected to impact. Therefore, use of organic glass such as a polycarbonate plate is being considered for laminated glass plates.

Meanwhile, interlayer films for laminated glass containing polyvinyl acetal-based resins often contain plasticizers in order to ensure flexibility and enhance adhesiveness to the glass. However, when interlayer films for laminated glass contain plasticizers, the plasticizers migrate into organic glass, corroding the organic glass while in use, thereby causing a problem of decreased light transmittance of glass plates composed of the organic glass, for example.

Thus, development of plasticizers that do not easily migrate into organic glass has been conducted conventionally. For example, Patent Literatures 1 and 2 disclose containment of an ester-based plasticizer or an ether-based plasticizer with a melting point of 30°C or lower and a hydroxy value of 15 to 450 mgKOH/g in an interlayer film for laminated glass containing polyvinyl acetal.

Also, there have conventionally been attempts to lower the content of plasticizers in interlayer films for laminated glass containing polyvinyl acetal. For example, for the purpose of realizing excellent corrosion resistance and long-term durability of laminated glass, Patent Literature 3 proposes an interlayer film for laminated glass in which polyvinyl acetal is contained in an amount of 40% by mass or more, the content of chlorine is 25 ppm or less, and the content of a plasticizer is 10 parts by mass or less based on 100 parts by mass of the polyvinyl acetal.

Furthermore, polyvinyl acetal-based resins have been attempted to be modified in order to impart a variety of functions to them. For example, Patent Literature 4 discloses a polyoxyalkylene-modified vinyl acetal-based polymer that has sufficient plasticity, solubility in alcohol solvents, and low viscosity and viscosity stability of those solutions, that is unlikely to undergo phase separation from other components, and that can provide slurries with excellent particle dispersing ability and thixotropy, sheets with excellent strength, peelability, and flexibility, and others. It is disclosed that the modified vinyl acetal-based polymer described in Patent Literature 4 contains monomer units including a polyoxypropylene block and a polyoxyethylene block, that the content rate of these monomer units is 0.05 to 10 mol%, that the viscosity average degree of polymerization is 150 to 5,000, and that the degree of acetalization is 10 to 85 mol%.

### Citation List

### Patent Literature

PTL1: JP 2015-151326 A
PTL2: WO 2011/016495
PTL3: WO 2013/002292
PTL4: JP 2014-136796 A

### Summary of Invention

### Technical Problem

However, in the interlayer films for laminated glass of Patent Literatures 1 and 2, there is no disclosure on the adhesive strength to polycarbonate plates. In addition, for example, an adhesive layer is used between the organic glass and the interlayer film in Patent Literature 1, and therefore, if the interlayer film for laminated glass itself is allowed to adhere to organic glass such as polycarbonate plates, it is considered difficult to make the adhesive force sufficiently high. Furthermore, since the content of a plasticizer is 30 to 50% by mass in Patent Literature 1 and an interlayer film for laminated glass containing a considerable amount of a plasticizer is implemented in Patent Literature 2 as well, it is not envisioned to reduce the content of a plasticizer to provide good adhesiveness.

In addition, while the content of a plasticizer is small in Patent Literature 3, the polyvinyl acetal-based resin used is a general-purpose one, which reduces the flexibility of the interlayer film for laminated glass and makes it difficult to achieve sufficiently high adhesiveness. Furthermore, Patent Literature 4 does not aim to improve adhesiveness to organic glass such as polycarbonate plates.

Therefore, an object of the present invention is to provide an interlayer film for laminated glass that comprises a polyvinyl acetal-based resin and that can, while preventing corrosion of organic glass such as polycarbonate plates, improve adhesiveness.

### Solution to Problem

As a result of diligent investigations, the present inventors have found that, in an interlayer film for laminated glass comprising a first layer containing a polyvinyl acetal-based resin, the above problems can be solved by keeping the glass transition temperature at or below a predetermined value while keeping the content of the plasticizer low, thereby completing the present invention.

That is, the present invention provides the following [1] to [26]:
[1] An interlayer film for laminated glass, comprising a first layer containing a polyvinyl acetal-based resin, the first layer containing no plasticizer or containing a plasticizer in an amount of 15 parts by mass or less based on 100 parts by mass of a resin contained in the first layer, and the first layer having a glass transition temperature (Tg) of 50°C or lower.
[2] The interlayer film for laminated glass according to the above [1], wherein the first layer contains no plasticizer or contains a plasticizer in an amount of 10 parts by mass or less based on 100 parts by mass of a resin.
[3] The interlayer film for laminated glass according to the above [1] or [2], wherein the interlayer film is used for a laminated glass in which at least any of laminated glass members is organic glass.
[4] The interlayer film for laminated glass according to any one of the above [1] to [3], wherein the adhesive force of a laminated glass sample obtained by compression-bonding a pair of polycarbonate plate glass in accordance with JIS K6735 at 100°C via the interlayer film for laminated glass is 100 N/225 mm² or more.
[5] The interlayer film for laminated glass according to any one of the above [1] to [4], wherein the adhesive force of a laminated glass sample obtained by compression-bonding a pair of methacrylate plate glass at 100°C via the interlayer film for laminated glass is 80 N/225 mm² or more.
[6] The interlayer film for laminated glass according to any one of the above [1] to [5], wherein the adhesive force of a laminated glass sample obtained by compression-bonding a pair of PET plate glass at 80°C via the interlayer film for laminated glass is 80 N/225 mm² or more.
[7] The interlayer film for laminated glass according to any one of the above [1] to [6], wherein the first layer constitutes an outermost surface of the interlayer film for laminated glass.
[8] The interlayer film for laminated glass according to any one of the above [1] to [7], wherein the polyvinyl acetal-based resin has a structure other than an acetal group, an acetyl group, and a hydroxy group as a side chain.
[9] The interlayer film for laminated glass according to the above [8], wherein the structure other than an acetal group, an acetyl group, and a hydroxy group is linked to the main chain via any linking group selected from the group consisting of an ester bond, an ether bond, -CH₂O-, and a urethane bond.
[10] The interlayer film for laminated glass according to any one of the above [1] to [9], wherein the glass transition temperature is 5°C or higher and 45°C or lower.
[11] The interlayer film for laminated glass according to any one of the above [1] to [10], wherein the polyvinyl acetal-based resin has at least one selected from the group consisting of functional groups represented by the following formula (1-1) to formula (1-4): 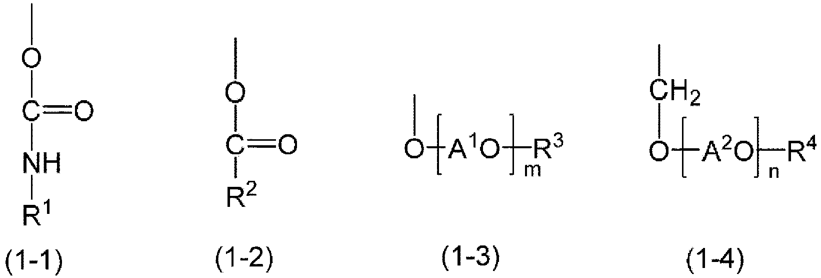 wherein, in formulae (1-1) and (1-2), R¹ and R² are each independently a hydrocarbon having 2 to 30 carbon atoms; in formulae (1-3) and (1-4), A¹O and A²O are each independently an oxyalkylene group having 2 to 4 carbon atoms; m and n are average repeating numbers and are 4 to 200; and R³ and R⁴ are each independently an alkyl group having 1 to 4 carbon atoms or a hydrogen atom; provided that, in formulae (1-3) and (1-4), the oxyalkylene group may be one type alone or may be a mixture of two or more types.
[12] The interlayer film for laminated glass according to the above [11], wherein, in the polyvinyl acetal-based resin, the amount of modification by the functional groups represented by the above formula (1-1) to formula (1-4) is 0.2 mol% or more and 25 mol% or less.
[13] The interlayer film for laminated glass according to the above [11] or [12], wherein the polyvinyl acetal-based resin has at least one selected from the group consisting of the functional groups represented by the above formula (1-1) and formula (1-2).
[14] The interlayer film for laminated glass according to any one of the above [11] to [13], wherein, in the polyvinyl acetal-based resin, the amount of modification by the functional groups represented by formula (1-1) and formula (1-2) is 5 mol% or more and 25 mol% or less.
[15] The interlayer film for laminated glass according to the above [11] or [12], wherein the polyvinyl acetal-based resin has at least one selected from the group consisting of the functional groups represented by the above formula (1-3) and formula (1-4).
[16] The interlayer film for laminated glass according to the above [11] or [15], wherein the amount of modification by the functional groups represented by the above formula (1-3) and formula (1-4) is 0.2 mol% or more and 12 mol% or less.
[17] The interlayer film for laminated glass according to any one of the above [1] to [7] and [10], wherein the polyvinyl acetal-based resin is an unmodified polyvinyl acetal resin and the amount of hydroxy groups therein is 15 mol% or less.
[18] The interlayer film for laminated glass according to any one of the above [1] to [17], wherein the polyvinyl acetal-based resin is a polyvinyl butyral-based resin.
[19] The interlayer film for laminated glass according to any one of the above [1] to [18], wherein the degree of acetalization of the polyvinyl acetal-based resin is 40 mol% or more and 85 mol% or less.
[20] The interlayer film for laminated glass according to any one of the above [1] to [19], wherein the amount of hydroxy groups in the polyvinyl acetal-based resin is 0 mol% or more and 35 mol% or less.
[21] The interlayer film for laminated glass according to any one of the above [1] to [20], wherein the degree of acetylation of the polyvinyl acetal-based resin is 0.01 mol% or more and 50 mol% or less.
[22] The interlayer film for laminated glass according to any one of the above [1] to [21], wherein the average degree of polymerization of the polyvinyl acetal-based resin is 300 or more and 5000 or less.
[23] The interlayer film for laminated glass according to any one of the above [1] to [22], having a single-layer or multilayer structure.
[24] A laminated glass comprising the interlayer film for laminated glass according to any one of the above [1] to [23] and first and second laminated glass members, wherein the interlayer film for laminated glass is disposed between the first and second laminated glass members.
[25] The laminated glass according to the above [24], wherein at least either of the first and second laminated glass members is organic glass.
[26] The laminated glass according to the above [25], wherein the first layer constitutes an outermost surface of the interlayer film for laminated glass and the outermost surface constituted by the first layer is in contact with the organic glass.

### Advantageous Effects of Invention

In the present invention, provided is an interlayer film for laminated glass that comprises a polyvinyl acetal-based resin and that can, while preventing corrosion of organic glass such as polycarbonate plates, improve adhesiveness.

### Brief Description of Drawings

[Fig. 1] Fig. 1 is a cross-sectional view schematically showing an interlayer film for laminated glass according to one embodiment of the present invention and laminated glass comprising the interlayer film for laminated glass.
[Fig. 2] Fig. 2 is a cross-sectional view schematically showing an interlayer film for laminated glass according to one embodiment of the present invention and laminated glass comprising the interlayer film for laminated glass.
[Fig. 3] Fig. 3 is a cross-sectional view schematically showing an interlayer film for laminated glass according to one embodiment of the present invention and laminated glass comprising the interlayer film for laminated glass.
[Fig. 4] Fig. 4 is a perspective view for describing a cross peeling test.

### Description of Embodiments

### <Interlayer film for laminated glass>

An interlayer film for laminated glass (hereinafter, also referred to as an "interlayer film") of the present invention at least comprises a layer (hereinafter, also referred to as a "first layer") containing a polyvinyl acetal-based resin. The first layer contains no plasticizer or contains a plasticizer in an amount of 15 parts by mass or less based on 100 parts by mass of the resin contained in the first layer, and has a glass transition temperature (Tg) of 50°C or lower.

In the present invention, the interlayer film has the above configuration, and thus can improve adhesiveness while preventing corrosion of organic glass such as polycarbonate plates.

Hereinafter, an interlayer film according to one embodiment of the present invention will be described in detail.

### [Glass transition temperature]

The first layer of the present invention has a glass transition temperature (Tg) of 50°C or lower. When the glass transition temperature (Tg) of the first layer exceeds 50°C, sufficient flexibility is not developed, making it difficult to achieve good adhesiveness to organic glass with relatively low polarity, such as polycarbonate plates. From the viewpoint of improving adhesiveness, the glass transition temperature (Tg) of the first layer is preferably 45°C or lower, and more preferably 44°C or lower. In addition, from the viewpoint of achieving excellent adhesiveness even when laminated glass is obtained by compression-bonding at relatively low temperatures such as about 80°C, the glass transition temperature (Tg) of the first layer is still more preferably 36°C or lower.

Note that the glass transition temperature (Tg) of the first layer is not particularly limited in terms of the lower limit value, but from the viewpoint of achieving good handleability without developing stickiness or other properties, it is, for example, 5°C or higher, preferably 10°C or higher, and more preferably 20°C or higher.

Note that the glass transition temperature of the first layer of the interlayer film can be detected by carrying out viscoelasticity measurement using a dynamic viscoelasticity measuring device, and reading peak temperatures of the loss tangent tan δ obtained from the results of the viscoelasticity measurement. Details of the measurement conditions are as described in Examples.

### [Polyvinyl acetal-based resin]

As described above, the first layer contains a polyvinyl acetal-based resin. Hereinafter, the polyvinyl acetal-based resin used in the first layer will be described in detail.

The polyvinyl acetal-based resin used in the first layer may be a modified polyvinyl acetal resin or may be an unmodified polyvinyl acetal resin. The polyvinyl acetal-based resin typically has acetal groups, hydroxy groups, and acetyl groups as side chains, but the modified polyvinyl acetal resin has a structure other than these as a side chain, for example.

The polyvinyl acetal-based resin is obtained by acetalizing a polyvinyl alcohol with an aldehyde and further allowing it to react with a modifying agent or to undergo a reacetylation treatment, if required. Also, in order to obtain the modified polyvinyl acetal resin, a modified polyvinyl alcohol may be used as the raw material polyvinyl alcohol.

It is preferable that the structure other than an acetal group, a hydroxy group, and an acetyl group be linked to the main chain via any of the following linking groups: an ester bond, an ether bond, -CH₂O-, and a urethane bond. More specifically, it is preferable that either a hydrocarbon group or a polyoxyalkylene group be linked to the main chain via the above linking groups. Note that, as for -CH₂O-, the carbon atom may be linked to the main chain. In addition, the hydrocarbon group has 2 to 30 carbon atoms, for example.

When the polyvinyl acetal-based resin contained in the first layer has the structure described above, even if the first layer contains no plasticizer or the content is small, the glass transition temperature (Tg) can be lowered and a certain degree of flexibility can be ensured, thereby achieving good adhesiveness to organic glass such as polycarbonate plates and inorganic glass.

When the structure other than an acetal group, a hydroxy group, and an acetyl group in the polyvinyl acetal-based resin contains a hydrocarbon group, it is preferable that the hydrocarbon group have a structure that is linked to the main chain via either an ester bond or a urethane bond. In addition, when a polyoxyalkylene group is contained, it is preferable that the polyoxyalkylene group have a structure that is linked to the main chain via either an ether bond or -CH₂O-.

More specifically, it is preferable that the polyvinyl acetal-based resin have at least one selected from the group consisting of functional groups represented by formula (1-1) to formula (1-4) below. When the polyvinyl acetal-based resin at least has the functional groups represented by formulae (1-1) to (1-4), even if it does not contain a plasticizer in a large amount, the glass transition temperature (Tg) of the first layer can be lowered and a certain degree of flexibility can be ensured, thereby achieving good adhesiveness to organic glass such as polycarbonate plates and inorganic glass. 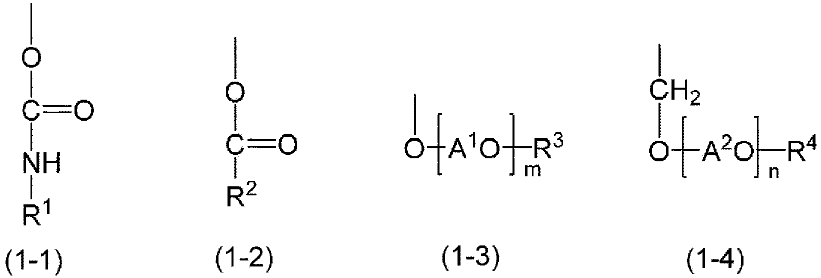 wherein, in formulae (1-1) and (1-2), R¹ and R² are each independently a hydrocarbon group having 2 to 30 carbon atoms. In formulae (1-3) and (1-4), A¹O and A²O are each independently an oxyalkylene group having 2 to 4 carbon atoms, and m and n are average repeating numbers and are 4 to 200. R³ and R⁴ are each independently an alkyl group having 1 to 4 carbon atoms or a hydrogen atom. Note that two or more types of oxyalkylene groups, for example, an oxyethylene group and an oxypropylene group, may be present in a mixed manner.

The hydrocarbon group in R¹ and R² may have or may not have an aromatic ring, but it is preferable that it be an aliphatic hydrocarbon group not having an aromatic ring. When it is an aliphatic hydrocarbon group, adhesiveness to organic glass such as polycarbonate plates can be easily improved. In addition, the aliphatic hydrocarbon group may be linear, may be branched, or may have a ring structure. For example, when the aliphatic hydrocarbon group is branched, the glass transition temperature (Tg) can be easily lowered.

Furthermore, the aliphatic hydrocarbon group may have an unsaturated bond or may not have an unsaturated bond. The aliphatic hydrocarbon group is preferably an alkenyl group, an alkyl group, or an alkynyl group, but it is more preferably an alkyl group.

The number of carbon atoms in each of R¹ and R² is preferably 3 or more, more preferably 5 or more, still more preferably 7 or more, and even more preferably 11 or more. When the number of carbon atoms in each of R¹ and R² is increased, the glass transition temperature (Tg) of the first layer can be easily lowered, and adhesiveness to organic glass and the like can be easily improved.

From the viewpoint of preventing crystallization or other problems and improving transmittance, the number of carbon atoms in each of R¹ and R² is preferably 24 or less, more preferably 20 or less, and still more preferably 18 or less.

Accordingly, R¹ and R² are each preferably an alkyl group having 3 to 24 carbon atoms, more preferably an alkyl group having 5 to 20 carbon atoms, still more preferably an alkyl group having 7 to 18 carbon atoms, and even more preferably an alkyl group having 11 to 18 carbon atoms.

Specific examples of R¹ and R² include a n-propyl group, an isopropyl group, a n-butyl group, a branched butyl group such as a s-butyl group and a t-butyl group, a n-pentyl group, a branched pentyl group, a n-hexyl group, a branched hexyl group, a n-heptyl group, a branched heptyl group such as an isoheptyl group and a 3-heptyl group, a n-octyl group, a branched octyl group such as an isooctyl group and a 2-ethylhexyl group, a n-nonyl group, a branched nonyl group such as an isononyl group, a n-decyl group, a branched decyl group, a n-undecyl group, a branched undecyl group, a n-dodecyl group, a branched dodecyl group, a n-tridecyl group, a branched tridecyl group, a n-tetradecyl group, a branched tetradecyl group, a n-pentadecyl group, a branched pentadecyl group, a n-hexadecyl group, a branched hexadecyl group, a n-heptadecyl group, a branched heptadecyl group, a n-octadecyl group, a branched octadecyl group, a n-nonadecyl group, a branched nonadecyl group, a n-icosyl group, a branched icosyl group, a n-henicosyl group, a branched henicosyl group, a n-docosyl group, a branched docosyl group, a n-tricosyl group, a branched docosyl group, a n-tetracosyl group, a branched tetracosyl group, and an oleyl group.

In formulae (1-3) and (1-4), A¹O and A²O are each independently an oxyalkylene group having 2 to 4 carbon atoms. The oxyalkylene group having 2 to 4 carbon atoms is an oxyethylene group, an oxypropylene group, or an oxybutylene group, preferably an oxyethylene group or an oxypropylene group, and more preferably an oxyethylene group. Note that two or more types of oxyalkylene groups may be used in combination, and in such a case, each oxyalkylene group may be added in a random manner or may be added in a block manner.
m and n represent the average repeating numbers of oxyalkylene groups, and are 4 to 200, preferably 4 to 100, more preferably 4 to 50, still more preferably 5 to 40, and particularly preferably 8 to 20.

In addition, examples of the alkyl group in R³ and R⁴ include a methyl group, an ethyl group, a n-propyl group, an isopropyl group, a n-butyl group, a s-butyl group, and a t-butyl group. Also, R³ and R⁴ are each independently an alkyl group having 1 to 4 carbon atoms or a hydrogen atom, but preferably an alkyl group having 1 to 2 carbon atoms, more preferably a methyl group or a hydrogen atom, and still more preferably a hydrogen atom.

Accordingly, it is particularly preferable that the functional group represented by formula (1-3) be a functional group represented by -O-(CH₂CH₂O)ₘ-H, and it is particularly preferable that the functional group represented by formula (1-4) be a functional group represented by -CH₂O-(CH₂CH₂O)ₙ-H. Note that the suitable ranges of m and n in these cases are also as described above.

The polyvinyl acetal-based resin typically has acetal groups, hydroxy groups, and acetyl groups as described above. However, when the polyvinyl acetal-based resin is modified by functional groups or subjected to a reacetylation reaction, it does not need to contain hydroxy groups.

In addition, it is preferable that the polyvinyl acetal-based resin have, by modification, at least one functional group selected from the group consisting of the functional groups represented by the above formula (1-1) to formula (1-4), as described above.

Note that the polyvinyl acetal-based resin having any of the functional groups represented by the above formula (1-1) to formula (1-4) may be described as a polyvinyl acetal-based resin (A) in order to distinguish it from other polyvinyl acetal-based resins.

In the polyvinyl acetal-based resin (A), the amount of modification by the functional groups represented by formula (1-1) to formula (1-4) is, for example, 0.2 mol% or more and 25 mol% or less, and preferably 0.5 mol% or more and 25 mol% or less. When the amount of modification is in the above range, the glass transition temperature (Tg) can be easily lowered, and the adhesiveness of the interlayer film to organic glass such as polycarbonate plates can be easily improved. The suitable value of the amount of modification by the functional groups represented by the above formula (1-1) to formula (1-4) depends on the types of functional groups.

For example, from the viewpoint of improving adhesiveness described above, in a polyvinyl acetal-based resin having any of the functional groups represented by formula (1-1) and formula (1-2) (hereinafter, this may be referred to as a "polyvinyl acetal-based resin (A-1)" for convenience's sake), the amount of modification by the functional groups represented by formula (1-1) and formula (1-2) is preferably 5 mol% or more and 25 mol% or less. Also, the amount of modification by the functional groups represented by formula (1-1) and formula (1-2) is more preferably 6 mol% or more, still more preferably 8 mol% or more, and even more preferably 10 mol% or more, and also preferably 25 mol% or less, more preferably 22 mol% or less, and still more preferably 18 mol% or less.

In addition, for example, from the viewpoint of improving adhesiveness described above, in a polyvinyl acetal-based resin having any of the functional groups represented by formula (1-3) and formula (1-4) (hereinafter, this may be referred to as a "polyvinyl acetal-based resin (A-2)" for convenience's sake), the amount of modification by the functional groups represented by formula (1-3) and formula (1-4) is preferably 0.2 mol% or more and 12 mol% or less. Also, the amount of modification by the functional groups represented by formula (1-3) and formula (1-4) is more preferably 0.5 mol% or more, still more preferably 1 mol% or more, and even more preferably 1.5 mol% or more, and also more preferably 10 mol% or less, still more preferably 8 mol% or less, and even more preferably 6 mol% or less.

Note that the amount of modification by each functional group represents the proportion of each functional group with respect to the entire vinyl monomer units constituting the polyvinyl acetal-based resin, and for example, the amount of modification by the functional groups represented by formula (1-1) and formula (1-2) represents the total amount of the proportions of these functional groups. Note that the amount of modification can be determined by carrying out proton NMR measurement on the polyvinyl acetal-based resin and calculating it from the obtained spectrum. The degree of acetalization, the amount of hydroxy groups, and the degree of acetylation, as will be described later, can also be determined in the same manner by carrying out proton NMR measurement and calculating them from the obtained spectrum.

The polyvinyl acetal-based resin may not have the functional groups represented by formulae (1-1) to (1-4) described above. Such a polyvinyl acetal-based resin may be a modified polyvinyl acetal resin having a functional group other than the functional groups represented by formulae (1-1) to (1-4), or it may be an unmodified polyvinyl acetal resin. Even when it is an unmodified polyvinyl acetal resin, the glass transition temperature (Tg) can be easily lowered by reducing the amount of hydroxy groups by a reacetylation reaction or other means, as will be described later.

The polyvinyl acetal-based resin has vinyl group-derived constituent units as the main chain, and the functional groups represented by formulae (1-1) to (1-4) may be those bonded to the vinyl group-derived constituent units constituting the main chain. Accordingly, it is preferable that the polyvinyl acetal-based resin have any of the constituent units represented by formula (2-1) to formula (2-4) below. 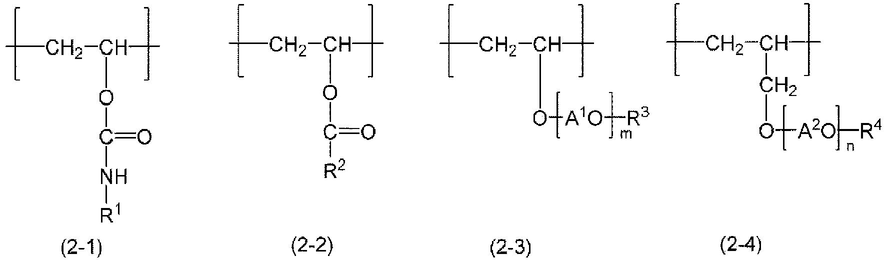 wherein, in formulae (2-1) and (2-2), R¹ and R² are each the same as described above. In formulae (2-3) and (2-4), A¹O, A²O, m, n, R³, and R⁴ are each the same as described above.

The polyvinyl acetal-based resin typically has acetal groups, hydroxy groups, and acetyl groups, and that is, the polyvinyl acetal-based resin typically has the constituent units represented by formula (3-1), formula (3-2), and formula (3-3) below. Accordingly, it is preferable that the modified polyvinyl acetal resin have the constituent units represented by formula (3-1), formula (3-2), and formula (3-3) below and at least one constituent unit selected from the group consisting of formula (2-1) to formula (2-4) described above.

However, when the polyvinyl acetal-based resin is an unmodified polyvinyl acetal resin, for example, it does not need to have hydroxy groups as described above, and it does not need to have the constituent unit represented by formula (3-2). That is, the unmodified polyvinyl acetal resin has the constituent units represented by formula (3-1) and formula (3-3) below, and may also optionally have the constituent unit represented by formula (3-2) below.

In addition, the polyvinyl acetal-based resin may be composed of the constituent units represented by formula (3-1), formula (3-2), and formula (3-3) below, or the constituent units represented by formula (3-1) and formula (3-3) below, and at least one constituent unit selected from the group consisting of formula (2-1) to formula (2-4) described above, but it may have a constituent unit having a functional group other than these. 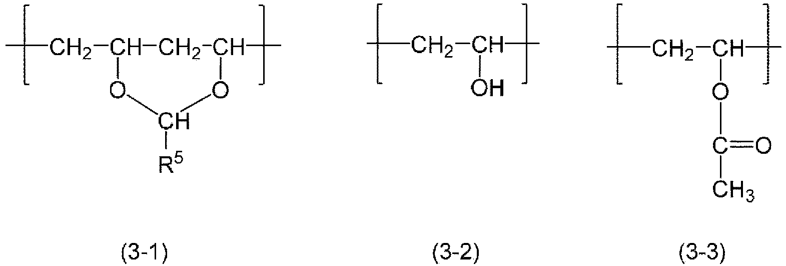 wherein, in formula (3-1), R⁵ represents a hydrogen atom or a hydrocarbon group having 1 to 19 carbon atoms.

As described above, the polyvinyl acetal-based resin is obtained by acetalizing a polyvinyl alcohol or a modified polyvinyl alcohol, which is formed by modifying a polyvinyl alcohol, with an aldehyde, followed by modification if required, and as the polyvinyl alcohol, a polyvinyl alcohol with a degree of saponification of 80 to 99.8 mol% is generally used. In addition, the average degree of polymerization of the polyvinyl alcohol is preferably 300 or more and 5000 or less in order to adjust the average degree of polymerization of the polyvinyl acetal-based resin in the desired range. The average degree of polymerization of the polyvinyl alcohol can be determined by a method in accordance with JIS K6726 "Testing Methods for Polyvinyl Alcohol".

The number of carbon atoms in the acetal group contained in the polyvinyl acetal-based resin is not particularly limited, but as represented by the above formula (3-1), it is 1 to 20, for example, preferably 2 to 10, more preferably 2 to 6, and still more preferably 2, 3, or 4. Accordingly, the number of carbon atoms in R⁵ represented in the above formula (3-1) is preferably 1 to 9, more preferably 1 to 5, and still more preferably 1 to 3.

As the acetal group, specifically, a butyral group is particularly preferred, and accordingly, a polyvinyl butyral-based resin is preferred as the polyvinyl acetal-based resin. The degree of acetalization (that is, amount of acetal groups) of the polyvinyl acetal-based resin is preferably 40 mol% or more and 85 mol% or less. In addition, the degree of acetalization is more preferably 55 mol% or more, and still more preferably 60 mol% or more, and also more preferably 80 mol% or less, and still more preferably 75 mol% or less. When the degree of acetalization is in these ranges, it is easier to allow the functional groups represented by formula (1-1) to formula (1-4) to be contained in a certain amount while keeping the amount of hydroxy groups in a moderate amount.

Note that the degree of acetalization means the degree of acetoacetalization when the acetal group of the polyvinyl acetal-based resin is an acetoacetal group, and it means the degree of butyralization when the acetal group is a butyral group.

In addition, the degree of acetalization represents the proportion of acetalized vinyl alcohol units with respect to the entire vinyl monomer units constituting the polyvinyl acetal-based resin.

The amount of hydroxy groups in the polyvinyl acetal-based resin is preferably 35 mol% or less. When the amount of hydroxy groups is 35 mol% or less, the glass transition temperature (Tg) can be easily lowered, and adhesiveness to organic glass such as polycarbonate plates can be easily enhanced. From such a viewpoint, in the case of the polyvinyl acetal-based resin (A), the amount of hydroxy groups is more preferably 30 mol% or less, and still more preferably 25 mol% or less.

The amount of hydroxy groups in the polyvinyl acetal-based resin may be 0 mol% or more, but in the case of the polyvinyl acetal-based resin (A), it may contain a certain amount of hydroxy groups from the viewpoint of preventing the interlayer film from being too flexible, and for example, the amount of hydroxy groups is 5 mol% or more, preferably 9 mol% or more, and more preferably 14 mol% or more.

In addition, when the polyvinyl acetal-based resin is an unmodified polyvinyl acetal resin, for example, the amount of hydroxy groups needs to be reduced in order to lower the glass transition temperature (Tg). Therefore, the amount of hydroxy groups in the unmodified polyvinyl acetal resin is preferably 15 mol% or less, more preferably 10 mol% or less, still more preferably 5 mol% or less, even more preferably 3 mol% or less, and most preferably 0 mol%.

Note that the amount of hydroxy groups represents the proportion of hydroxy groups with respect to the entire vinyl monomer units constituting the polyvinyl acetal-based resin.

The degree of acetylation (amount of acetyl groups) of the above polyvinyl acetal-based resins is, for example, 0.01 mol% or more and 50 mol% or less, but in the case of the polyvinyl acetal-based resin (A), in order to keep the amount of modification by the functional groups represented by formula (1-1) to formula (1-4) at or above a certain value, the degree of acetylation may also be kept at or below a certain value. Accordingly, the degree of acetylation of the polyvinyl acetal-based resin (A) is preferably 20 mol% or less, more preferably 15 mol% or less, still more preferably 12 mol% or less, and even more preferably 5 mol% or less.

In addition, the degree of acetylation of the polyvinyl acetal-based resin (A) is, for example, 0.01 mol% or more as described above, but it is preferably 0.1 mol% or more, and more preferably 0.5 mol% or more.

In addition, from the viewpoint of lowering the glass transition temperature (Tg) of the first layer, in the case of the unmodified polyvinyl acetal resin, its degree of acetylation may be at or above a certain value, and it is preferably 15 mol% or more, more preferably 25 mol% or more, and still more preferably 33 mol% or more. Also, the degree of acetylation of the unmodified polyvinyl acetal resin is, for example, 50 mol% or less as described above, but it is preferably 45 mol% or less, and still more preferably 42 mol% or less.

Note that the degree of acetylation represents the proportion of acetyl groups with respect to the entire vinyl monomer units constituting the polyvinyl acetal-based resin.

The average degree of polymerization of the polyvinyl acetal-based resin is preferably 300 or more and 5000 or less. By adjusting the average degree of polymerization in the above range, adhesiveness can be easily improved while maintaining mechanical strength, flexibility, and other properties well. From these viewpoints, the average degree of polymerization of the polyvinyl acetal-based resin is more preferably 500 or more, still more preferably 700 or more, and from the viewpoint of making it easier to further improve adhesiveness, even more preferably 2400 or more. In addition, the average degree of polymerization is more preferably 4500 or less, still more preferably 4000 or less, and even more preferably 3500 or less.

Note that the average degree of polymerization of the polyvinyl acetal-based resin is the same as the average degree of polymerization of the raw material polyvinyl alcohol, and can be determined from the average degree of polymerization of the polyvinyl alcohol.

The aldehyde used in producing the polyvinyl acetal-based resin is not particularly limited, and is, for example, an aldehyde having 1 to 20 carbon atoms, but an aldehyde having 2 to 10 carbon atoms is suitably used. The above aldehyde having 2 to 10 carbon atoms is not particularly limited, and examples thereof include acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Above all, aldehydes having 2 to 6 carbon atoms such as acetaldehyde, n-butyraldehyde, n-hexylaldehyde, and n-valeraldehyde are preferred, aldehydes having 2, 3 and 4 carbon atoms are more preferred, and n-butyraldehyde is still more preferred. These aldehydes may be used alone, or two or more types thereof may be used in combination.

The polyvinyl acetal-based resin used in the present invention may be used alone as one type, or two or more types thereof may be used in combination.

The first layer that the interlayer film of the present invention has may contain a resin other than the polyvinyl acetal-based resin as the resin as long as the effects of the present invention are achieved. Examples of such a resin include a thermoplastic resin other than the polyvinyl acetal-based resin. However, the polyvinyl acetal-based resin may be the main component. Examples of the thermoplastic resin other than the polyvinyl acetal-based resin include an acrylic resin.

Specifically, the total amount of the polyvinyl acetal-based resin is, for example, 50% by mass or more, preferably 70% by mass or more, more preferably 90% by mass or more, and most preferably 100% by mass based on the entire amount of the resin contained in the first layer. Accordingly, the resin contained in the first layer of the present invention may consist only of the polyvinyl acetal-based resin.

### (Plasticizer)

The first layer of the present invention may contain a plasticizer. When the first layer contains a plasticizer, it becomes flexible, and the glass transition temperature (Tg) of the first layer can be lowered and adhesiveness to a variety of adherends, such as organic glass and other resin materials and inorganic glass, can be enhanced. However, the first layer does not contain any plasticizer, or even if it does, only in a small amount. When the first layer contains a plasticizer only in a small amount or does not contain any plasticizer, even if the first layer is used for a long period of time in contact with organic glass such as polycarbonate plates, that resin material can be prevented from being corroded by the plasticizer. Therefore, even after use for a long period of time, the transparency of the organic glass or other materials can be easily ensured. Furthermore, even when the first layer is used in contact with inorganic glass, bleeding of the plasticizer can be prevented.

In addition, even when the first layer contains a small amount of or no plasticizer, by keeping the glass transition temperature (Tg) in a predetermined range, adhesiveness to organic glass such as polycarbonate plates, inorganic glass, and other materials can be made good.

The content of the plasticizer in the first layer is 15 parts by mass or less based on 100 parts by mass of the resin contained in the first layer. When it is larger than 15 parts by mass, corrosion of the organic glass by the plasticizer and bleeding of the plasticizer are more likely to occur. From the viewpoint of suppressing corrosion of the organic glass and bleeding of the plasticizer, the above content of the plasticizer is preferably 10 parts by mass or less, more preferably 5 parts by mass or less, still more preferably 3 parts by mass or less, and even more preferably 1 part by mass or less. The lower limit of the content of the plasticizer is 0 parts by mass.

When the polyvinyl acetal-based resin (A) is used, it is most preferable that the first layer of the present invention do not contain any plasticizer, that is, the content of the plasticizer be 0 parts by mass. On the other hand, when an unmodified polyvinyl acetal resin is used, the first layer may contain a plasticizer from the viewpoint of lowering the glass transition temperature (Tg) of the first layer and improving adhesiveness.

Examples of the plasticizer include an organic ester plasticizer, as well as a phosphorus plasticizer such as an organophosphate plasticizer and an organophosphite plasticizer. The plasticizer may be used alone as one type, or two or more types thereof may be used in combination. Above all, the organic ester plasticizer is preferred. Examples of the organic ester plasticizer include a monobasic organic acid ester and a polybasic organic acid ester.

Examples of the monobasic organic acid ester include an ester of a glycol and a monobasic organic acid. Examples of the glycol include a polyalkylene glycol in which each alkylene unit has 2 to 4 carbon atoms, preferably 2 or 3 carbon atoms, and the repeating number of the alkylene unit is 2 to 10, preferably 2 to 4. In addition, the glycol may be a monoalkylene glycol (that is, the number of repeating unit is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specific examples thereof include butyric acid, isobutyric acid, caproic acid, 2-ethylbutyric acid, heptylic acid, n-octylic acid, 2-ethylhexylic acid, n-nonylic acid, and decylic acid.

Specific examples of the monobasic organic acid include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2 -ethylbutyrate.

In addition, examples of the polybasic organic acid ester include an ester compound of a dibasic organic acid having 4 to 12 carbon atoms, such as adipic acid, sebacic acid, and azelaic acid, and an alcohol having 4 to 10 carbon atoms. The alcohol having 4 to 10 carbon atoms may be linear, may have a branched structure, or may have a cyclic structure.

Specific examples thereof include dibutyl sebacate, dioctyl azelate, dihexyl adipate, dioctyl adipate, hexyl cyclohexyl adipate, diisononyl adipate, heptyl nonyl adipate, dibutyl carbitol adipate, and a mixed adipate ester. Alternatively, it may be an oil-modified sebacic alkyd. Examples of the mixed adipate ester include an adipate ester fabricated from two or more alcohols selected from the group consisting of alkyl alcohols having 4 to 9 carbon atoms and cyclic alcohols having 4 to 9 carbon atoms.

Examples of the above organic phosphate plasticizer include a phosphate ester such as tributoxyethyl phosphate, isodecyl phenyl phosphate, and triisopropyl phosphate.

Among the above, triethylene glycol-di-2-ethylhexanoate (3GO) is particularly suitably used as the plasticizer.

In addition to the plasticizer, the first layer may also contain other known additives that are used in combination with polyvinyl acetal-based resins, as appropriate. That is, the first layer may be formed of a resin composition consisting of a resin such as the polyvinyl acetal-based resin, or may be formed of a resin composition that contains, in addition to the resin, a plasticizer compounded if required, or additives other than the plasticizer.

Specific examples of the additives other than the plasticizer include an ultraviolet absorber, an infrared absorber, an antioxidant, a light stabilizer, an adhesive force adjuster, a pigment, a dye, a fluorescent whitening agent, and a crystal nucleating agent.

### [Layer configuration]

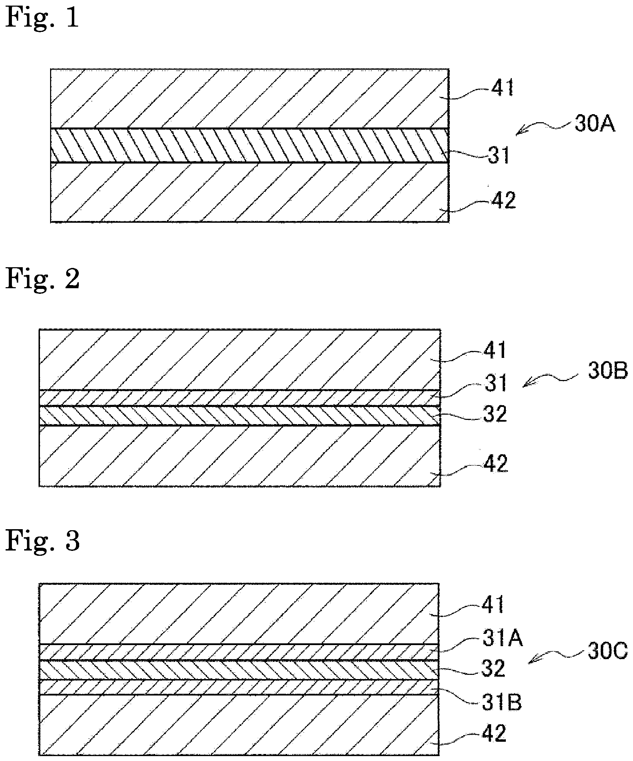

The interlayer film of the present invention may be an interlayer film 30A composed solely of a first layer 31, as shown in Fig. 1. When the interlayer film is composed solely of the first layer 31, both sides of the first layer 31 constitute the outermost surfaces in contact with a pair of laminated glass members (first and second laminated glass members 41 and 42) that constitute laminated glass. Therefore, when one or both of the first and second laminated glass members 41 and 42 are organic glass, while improving the adhesiveness of the interlayer film 30A to the organic glass, corrosion of the organic glass by the interlayer film can be effectively prevented. Note that, as will be described later, the organic glass is preferably a polycarbonate plate or a methacrylate plate, and it is particularly preferably a polycarbonate plate.

Alternatively, the interlayer film may have a multilayer structure including at least the first layer. The interlayer film with a multilayer structure may have at least one layer of the first layer. However, even in the case of a multilayer structure, it is preferable that the first layer constitute an outermost surface of the interlayer film. When the first layer constitutes an outermost surface and is disposed at a position in contact with a laminated glass member that is organic glass, corrosion of the organic glass by the interlayer film can be effectively prevented while improving the adhesiveness of the interlayer film to the organic glass.

Also, in the case of a multilayer structure, the interlayer film may have two or more layers of the first layer, and by having two or more layers, both of the two outermost surfaces of the interlayer film can be constituted by the first layers, even in the case of a multilayer structure. When the interlayer film has two or more layers of the first layer, the compositional features of each layer may be different, or may be the same.

Alternatively, the interlayer film may have a laminated structure having the first layer and a layer other than the first layer described above (hereinafter, referred to as a "second layer"). In this case, one of the outermost surfaces may be constituted by the first layer and the other outermost surface by the second layer, or both of the outermost surfaces may be constituted by the first layers.

When the interlayer film has the first layer and the second layer, for example, it may be an interlayer film 30B with a two-layer structure of a first layer 31 and a second layer 32 as shown in Fig. 2, it may be an interlayer film 30C with a three-layer structure in which a first layer 31A, a second layer 32, and a first layer 31B are provided in sequence as shown in Fig. 3, or it may have a structure with three or more layers.

When one of the outermost surfaces of the interlayer film is constituted by the first layer and the other outermost surface is constituted by the second layer, it is preferable that a laminated glass member in contact with one outermost surface be constituted by organic glass and a laminated glass member in contact with the other outermost surface be constituted by inorganic glass. Accordingly, in the interlayer film 30B shown in Fig. 2, it is preferable that a first laminated glass member 41 in contact with the first layer 31 be organic glass and a second laminated glass member 42 in contact with the second layer 32 be inorganic glass.

This can effectively prevent corrosion of the organic glass by the interlayer film while enhancing the adhesive force of the interlayer film to the organic glass. In addition, the second layer enables the interlayer film to adhere to the inorganic glass with a high adhesive force as well, and as a result, the interlayer film can adhere to any of the laminated glass members with a high adhesive force.

Alternatively, when the interlayer film has a multilayer structure and both of the outermost surfaces are constituted by the first layers, it is preferable that a laminated glass member in contact with one outermost surface be constituted by organic glass and a laminated glass member in contact with the other outermost surface be constituted by either inorganic glass or organic glass. However, it is more preferable that both of the laminated glass members in contact with both outermost surfaces be constituted by organic glass.

Accordingly, in the interlayer film 30C shown in Fig. 3, it is preferable that a first laminated glass member 41 in contact with one first layer 31A be organic glass and a second laminated glass member 42 in contact with the other first layer 31B be organic glass or inorganic glass, but it is more preferable that both of the first and second laminated glass members 41 and 42 be organic glass.
The above configuration can effectively prevent corrosion of the organic glass by the interlayer film while enhancing the adhesive force of the interlayer film 30 to the organic glass.

The second layer has compositional features and physical properties different from those of the above first layer, and is preferably a resin layer containing a thermoplastic resin. Examples of the thermoplastic resin include a polyvinyl acetal-based resin, an acrylic resin, an ethylene-vinyl acetate copolymer resin, an ionomer resin, a polyurethane resin, and a thermoplastic elastomer.
By using these resins, adhesiveness to glass plates or the first layer can be easily ensured. The thermoplastic resin may be used alone as one type, or two or more types thereof may be used in combination.

In addition, the second layer may be a layer formed of a resin composition consisting of the thermoplastic resin, or a resin composition containing, in addition to the thermoplastic resin, a plasticizer and additives other than the plasticizer, as appropriate.

### (Adhesive force of interlayer film)

In the present invention, it is preferable that the adhesive force of a laminated glass sample obtained by compression-bonding a pair of polycarbonate plate glass in accordance with JIS K6735 at 100°C via the above interlayer film be 100 N/225 mm² or more. When the above adhesive force is 100 N/225 mm² or more, adhesiveness to organic glass such as polycarbonate plates is sufficiently high. From the viewpoint of ensuring a higher adhesive force, it is more preferable that the above adhesive force be 200 N/225 mm² or more.

In addition, it is also preferable that the adhesive force of a laminated glass sample obtained by compression-bonding a pair of polycarbonate plate glass in accordance with JIS K6735 at 80°C via the above interlayer film be 100 N/225 mm² or more. As described above, if the adhesive force at the time of compression-bonding at not only 100°C but also 80°C is 100 N/225 mm² or more, high adhesiveness to organic glass such as polycarbonate plates can be ensured even at low temperatures, thereby improving the productivity of laminated glass.

Also, it is more preferable that the adhesive force at the time of compression-bonding at 80°C be 200 N/225 mm² or more.

Note that the method for measuring the adhesive force is carried out on a laminated glass sample obtained by passing through the following first, second, and third processes in this order.

First process: An interlayer film of 15 mm in length and 15 mm in width is prepared, and two sheets of polycarbonate plate glass of 2 mm in thickness, 25 mm in length, and 100 mm in width in accordance with JIS K6735 are also prepared. The two sheets of polycarbonate plate glass are disposed so that their longitudinal directions are perpendicular to each other, and they are overlapped crosswise via the interlayer film.

Second process: Using a spacer of the same thickness as the interlayer film so that the thickness of the interlayer film is constant, the two sheets of polycarbonate plate glass that have been overlapped via the interlayer film are temporarily compression-bonded for 3 minutes under conditions of 80°C or 100°C and 0.1 MPa in a vacuum laminator.

Third process: The two sheets of polycarbonate plate glass that have been temporarily compression-bonded are subjected to final compression-bonding for 1 hour under conditions of 80°C or 100°C and 0.5 MPa.

Next, a cross peeling test is carried out on the obtained laminated glass sample. Specifically, the maximum load (N) is measured when one sheet of polycarbonate plate glass is peeled off from the other sheet of polycarbonate plate glass in a direction perpendicular to the adhesive surface at a speed of 10 mm/min at 23°C, and this maximum load (N) is defined as the adhesive force.

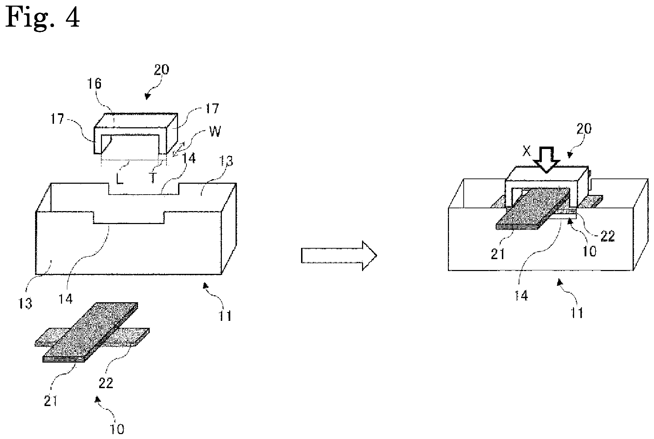

More specifically, the adhesive force may be measured by setting the sample on the jig shown in Fig. 4. The jig is composed of a box body 11 and a pressing member 20. The box body 11 and the pressing member 20 are composed of SUS. The box body 11 is in the form of a rectangular parallelepiped with an open top surface, and rectangular cutouts 14 and 14 are provided on the upper end surfaces of sides 13 and 13 facing each other. The pressing member 20 is a U-shaped member provided with a rectangular base section 16 and pressing pieces 17 and 17 connected at right angles to both ends of the base 16 in the longitudinal direction. Each pressing piece 17 has a width W of 20 mm and a thickness T of 5 mm, and the distance L between the pressing pieces 17 and 17 is 35 mm.

The laminated glass sample 10 is disposed with one sheet of polycarbonate plate glass 21 bridging over between the cutouts 14 and 14 so that the other sheet of polycarbonate plate 22 is disposed on the bottom side. The maximum load (N) is measured when the polycarbonate plate glass 31 is peeled off by applying a load in the vertical downward direction X, which is perpendicular to the adhesive surface, at a speed of 10 mm/min, and from that maximum load (N), the adhesive force (N/225 mm²) is determined.

The interlayer film of the present invention has good adhesiveness to a variety of types of organic glass. Specifically, the adhesive force of a laminated glass sample obtained by compression-bonding a pair of methacrylate plate glass via the above interlayer film at 100°C is preferably 80 N/225 mm² or more, more preferably 100 N/225 mm² or more, and still more preferably 200 N/225 mm² or more.

In addition, the adhesive force of a laminated glass sample obtained by compression-bonding a pair of PET plate glass via the above interlayer film at 80°C is preferably 80 N/225 mm² or more, and more preferably 100 N/225 mm² or more.

Note that the method for measuring the adhesive force in a laminated glass sample obtained from methacrylate plate glass and PET plate glass is the same as the method for measuring the adhesive force in the laminated glass sample obtained from polycarbonate plate glass, except that the polycarbonate plate glass is changed to methacrylate plate glass or PET plate glass.

### (Visible light transmittance)

As for the interlayer film of the present invention, when fabricating laminated glass using two sheets of polycarbonate plate glass with a thickness of 2 mm and a visible light transmittance of 90% in accordance with JIS K6735, the visible light transmittance of the laminated glass is preferably 70% or more. When fabricating laminated glass using the interlayer film of the present invention, a visible light transmittance of 70% or more can ensure high transparency of the laminated glass. From such a viewpoint, the above visible light transmittance is more preferably 80% or more, and still more preferably 85% or more.

Note that the visible light transmittance can be measured using a spectrophotometer in accordance with JIS R3211 (1998).

### (Thickness of interlayer film)

The thickness of the interlayer film of the present invention is, for example, 100 µm or more and 2000 µm or less, and preferably 250 µm or more and 900 µm or less. By keeping the thickness of the interlayer film in such a range, it is possible to achieve good adhesiveness to laminated glass members without making it thicker than necessary.

### [Method for producing polyvinyl acetal-based resin]

The polyvinyl acetal-based resin used for the first layer in the present invention is obtained by acetalizing a polyvinyl alcohol (also referred to as a "raw material polyvinyl alcohol") with an aldehyde and then allowing it to react with a modifying agent or to undergo a reacetylation treatment, if required. The raw material polyvinyl alcohol may be an unmodified polyvinyl alcohol, but in the case of obtaining a modified polyvinyl acetal resin, a modified polyvinyl alcohol may be used as the raw material polyvinyl alcohol.

Specifically, for example, when producing the polyvinyl acetal-based resin having at least one selected from the group consisting of the functional groups represented by the above formula (1-1) and formula (1-2) (modified polyvinyl acetal resin (A-1)), it is preferable to produce it by the production method (1) below.

### (Production method (1))

In the present production method (1), the raw material polyvinyl alcohol is acetalized with an aldehyde to obtain a polyvinyl acetal-based resin (hereinafter, also referred to as a raw material polyvinyl acetal-based resin). The raw material polyvinyl alcohol used here is obtained by saponifying a polyvinyl ester, and it is preferably an unmodified polyvinyl alcohol.

Next, a modifying agent having R¹ or R² is allowed to react with the above raw material polyvinyl acetal-based resin to introduce at least any of the functional groups represented by formula (1-1) and formula (1-2) into the raw material polyvinyl acetal-based resin. Here, the modifying agent may be a compound having a reactive group that reacts with a hydroxy group that the raw material polyvinyl acetal-based resin has to form a urethane bond represented in formula (1-1) or an ester bond represented in formula (1-2).

Specific examples of the compound having reactivity to react with a hydroxy group to form a urethane bond include an isocyanate compound represented by R¹-NCO (where R¹ is the same as described above). The isocyanate compound has high reactivity with a hydroxy group that the raw material polyvinyl acetal-based resin has, and the functional group represented by formula (1-1) can be readily introduced.

Also, examples of the compound having a reactive group that reacts with a hydroxy group to form an ester bond include a carboxylic acid represented by R²-COOH (where R² is the same as described above), or a carboxylic acid derivative such as a carboxylic anhydride, a carboxylate ester, and a carboxylic acid halide. Among these, a carboxylic acid halide represented by R²-COX (where R² is the same as described above and X is a halogen atom) is preferred, and a carboxylic acid chloride where X is a chlorine atom is more preferred. The carboxylic acid halide such as a carboxylic acid chloride has high reactivity with a hydroxy group that the raw material polyvinyl acetal-based resin has, and the functional group represented by formula (1-2) can be readily introduced.

Specific examples of the preferred isocyanate compound include hexyl isocyanate, 2-ethylhexyl isocyanate, n-octyl isocyanate, n-nonyl isocyanate, n-decyl isocyanate, n-undecyl isocyanate, n-dodecyl isocyanate, n- tetradecyl isocyanate, n-hexadecyl isocyanate, n-octadecyl isocyanate, and n-icosyl isocyanate, and n-octadecyl isocyanate is preferred.

Also, examples of the preferred carboxylic acid chloride include 2-ethylhexanoyl chloride, n-octanoyl chloride, n-nonanoyl chloride, n-decanoyl chloride, n-undecanoyl chloride, lauroyl chloride, myristyl chloride, palmitoyl chloride, isopalmitoyl chloride, stearoyl chloride, isostearoyl chloride, oleoyl chloride, and behenic acid chloride. Among these, preferred is any of the following: 2-ethylhexanoyl chloride, lauroyl chloride, myristyl chloride, palmitoyl chloride, and stearoyl chloride, and more preferred are lauroyl chloride, myristyl chloride, and palmitoyl chloride.

In the above production method (1), the reaction of the raw material polyvinyl acetal-based resin and the modifying agent such as isocyanate compound or carboxylic acid halide is not particularly limited, but it may be carried out by, for example, heating the raw material polyvinyl acetal-based resin and the modifying agent in a solvent at, for example, 30°C or higher and 150°C or lower, preferably at about 50°C or higher and 140°C or lower. The reaction may be carried out in the presence of a base or an acid, and for example, pyridine or the like is used as the base.

However, the method for producing the modified polyvinyl acetal resin (A-1) is not limited to the above, and it may be produced by obtaining a modified polyvinyl alcohol and acetalizing that modified polyvinyl alcohol, as shown in the production method (2) below.

### (Production method 2)

In the present production method (2), at first, a modified polyvinyl alcohol is produced as the raw material polyvinyl alcohol. Specifically, a modifying agent is allowed to react with an unmodified polyvinyl alcohol obtained by saponifying a polyvinyl ester to introduce the functional group of formula (1-1) or formula (1-2) into some of the side chains of the polyvinyl alcohol. Note that specific examples of the modifying agent are as exemplified in the above production method (1). Then, the obtained modified polyvinyl alcohol is acetalized with an aldehyde to obtain the polyvinyl acetal-based resin (A).

Also, for example, when producing the polyvinyl acetal-based resin having at least any of the functional groups represented by the above formula (1-3) and formula (1-4) (modified polyvinyl acetal resin (A-2)), it is preferable to produce it by the production method (3) below.

### (Production method (3))

In the present production method (3), at first, a polyoxyalkylene-modified polyvinyl alcohol is produced as the raw material polyvinyl alcohol. Specifically, it is obtained by polymerizing a vinyl ester and a monomer including a vinyl monomer having a polyoxyalkylene group to obtain a polymer, and then saponifying the polymer. For the saponification, an alkali or an acid is generally used, but it is preferable to use an alkali. As the PVA-based polymer, only one type may be used, or two or more types thereof may be used in combination.

Next, the polyoxyalkylene-modified polyvinyl alcohol obtained as described above may be acetalized with an aldehyde to obtain the modified polyvinyl acetal resin (A-2). The method for acetalization may be carried out by known methods.

As the vinyl ester used in the production method (3), vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate, and others can be used. Among these, vinyl acetate is preferred.

In addition, specific examples of the vinyl monomer having a polyoxyalkylene group used in the production method (3) include a polyoxyalkylene vinyl ether represented by formula (4-1) below, and a polyoxyalkylene allyl ether represented by formula (4-2) below. 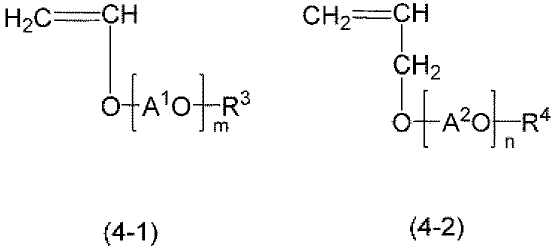 wherein, in formulae (4-1) and (4-2), A¹O, A²O, m, n, R³, and R⁴ are each the same as described above.

Preferred specific examples of the vinyl monomer having a polyoxyalkylene group include polyoxyethylene monovinyl ether, polyoxyethylene polyoxypropylene monovinyl ether, polyoxypropylene monovinyl ether, polyoxyethylene monoallyl ether, polyoxyethylene polyoxypropylene monoallyl ether, and polyoxypropylene monoallyl ether, and among these, polyoxyethylene monovinyl ether, polyoxyethylene monoallyl ether, polyoxypropylene monovinyl ether, polyoxypropylene monoallyl ether are more preferred.

In addition, in the case of an unmodified polyvinyl acetal resin, it is preferable that it be produced by the production method (4) below.

### (Production method (4))

In the present production method (4), the raw material polyvinyl alcohol is acetalized with an aldehyde to obtain a polyvinyl acetal-based resin (hereinafter, also referred to as a raw material polyvinyl acetal-based resin). Here, an unmodified polyvinyl alcohol obtained by saponifying a polyvinyl ester is used as the raw material polyvinyl alcohol. Next, the raw material polyvinyl acetal-based resin may be subjected to a reacetylation treatment to obtain the unmodified polyvinyl acetal resin. The reacetylation treatment may be carried out by conventionally known methods, and it may be carried out using acetic anhydride in the presence of a base such as pyridine. In addition, the reacetylation treatment may be carried out by heating to, for example, 50°C or higher and 100°C or lower, preferably to about 70°C or higher and 90°C or lower. When the polyvinyl acetal-based resin is subjected to the reacetylation treatment, the amount of hydroxy groups is reduced, and the glass transition temperature (Tg) can be easily lowered.

### [Method for producing interlayer film]

As for the interlayer film, at first, a resin composition for obtaining the first layer is prepared. As for the resin composition, the polyvinyl acetal-based resin produced as described above can be used as it is as the resin composition. Also, the resin composition may be prepared by adding a plasticizer, additives, and other agents to the polyvinyl acetal-based resin produced as described above, if required. In addition, the resin composition may be diluted in a solvent as appropriate.

As for the interlayer film, the above resin composition may be molded into the form of a film by known methods to obtain the first layer. Specifically, the resin composition may be applied to a support such as a release sheet, or poured into a mold, heated and dried as appropriate if required, and molded into the form of a sheet, or it may be molded by extrusion molding, press molding, or other methods.

Also, when the polyvinyl acetal-based resin is obtained by allowing a raw material polyvinyl acetal-based resin to react with a modifying agent, as described above, it may be molded as follows. That is, a composition containing the raw material polyvinyl acetal-based resin, the modifying agent, and other additives such as a plasticizer compounded if required, may be applied onto a support such as a release sheet, or poured into a mold, and then heated, thereby allowing the modifying agent to react with the raw material polyvinyl acetal-based resin and molding the composition into the form of a film to obtain the first layer.

Furthermore, when the interlayer film has a multilayer structure, a resin composition for obtaining a layer other than the first layer (second layer) may also be prepared, and the second layer may be obtained from that resin composition. In the case of a multilayer structure, the first layer and the second layer may be overlapped as appropriate to obtain the interlayer film, or the multilayer structure may be molded by co-extrusion or other methods.

### <Laminated glass>

A laminated glass of the present invention comprises a first laminated glass member, a second laminated glass member, and an interlayer film disposed between these first and second laminated glass members. In the laminated glass, the first and second laminated glass members are joined by the interlayer film, and the first laminated glass member adheres to one outermost surface of the interlayer film and the second laminated glass member adheres to the other outermost surface of the interlayer film. The configuration of the interlayer film of the present invention is as described above.

Each of the first and second laminated glass members is a glass plate, and may be selected from the group consisting of inorganic glass and organic glass. In the laminated glass of the present invention, it is preferable that at least one laminated glass member be organic glass. In this case, as for the first and second glass members, one may be organic glass and the other may be inorganic glass, or both may be organic glass, as described above. By using organic glass, corrosion of the laminated glass member by the interlayer film can be effectively prevented while improving the adhesiveness of the interlayer film to the laminated glass member.

The inorganic glass is not particularly limited, but examples thereof include a variety of glass plates such as float plate glass, tempered glass, colored glass, polished plate glass, figured glass, wire mesh plate glass, wired plate glass, ultraviolet absorbing plate glass, infrared reflecting plate glass, infrared absorbing plate glass, and green glass. The inorganic glass may be subjected to a surface treatment or other treatments.

The thickness of the inorganic glass is not particularly limited, but it is preferably 0.1 mm or more, and still more preferably 1.0 mm or more, and also preferably 5.0 mm or less, and still more preferably 3.2 mm or less.

The organic glass is not particularly limited, but examples thereof include a variety of organic glass plates such as a polycarbonate plate, a methacrylate plate such as a polymethyl methacrylate plate, an acrylonitrile styrene copolymer plate, an acrylonitrile butadiene styrene copolymer plate, a polyester plate such as a polyethylene terephthalate (PET) plate, a fluorine-based resin plate, a polyvinyl chloride plate, a chlorinated polyvinyl chloride plate, a polypropylene plate, a polystyrene plate, a polysulfone plate, an epoxy resin plate, a phenolic resin plate, an unsaturated polyester resin plate, and a polyimide resin plate. The organic glass may be subjected to a surface treatment or other treatments as appropriate.

Among those described above, a polycarbonate plate is preferred in terms of its excellent transparency, impact resistance, and combustion resistance, and a methacrylate plate such as a polymethyl methacrylate plate is preferred in terms of its high transparency and excellent weather resistance and mechanical strength. Among these, a polycarbonate plate is preferred. In the present invention, even when the interlayer film is used for organic glass with high hydrophobicity, such as a polycarbonate plate or a methacrylate plate, as a laminated glass member, it is possible to adhere to the laminated glass member with high adhesiveness. Corrosion of the organic glass by the interlayer film can also be prevented.

The thickness of the organic glass is not particularly limited, but it is preferably 0.1 mm or more, and still more preferably 0.3 mm or more, and also preferably 5.0 mm or less, and still more preferably 3.0 mm or less.

The laminated glass of the present invention can be used in a variety of fields. Specifically, it is used for window glass in a variety of carriages such as vehicles including automobiles and trains, ships, and aircraft, or in a variety of architectural structures such as buildings, condominiums, single-family homes, halls, and gymnasiums, or in machine tools such as cutting and grinding machines, and construction machinery such as shovels and cranes.

### [Method for producing laminated glass]

The laminated glass can be produced by disposing the interlayer film that has been fabricated in advance between the first and second laminated glass members, and subjecting them to thermocompression bonding or other processes. As for the laminated glass of the present invention, in a case where the interlayer film has a multilayer structure, the interlayer film with a multilayer structure may be created in advance, and the interlayer film with a multilayer structure may be disposed between the first and second laminated glass members. Alternatively, a plurality of resin films for forming the first layer, second layer, or other layer may be overlapped between the first and second laminated glass members, and while the plurality of resin films are integrated into the interlayer film with a multilayer structure, the first and second laminated glass members may be joined via the interlayer film.

The method for thermocompression bonding is not particularly limited, and it may be performed by disposing the interlayer film or the like between a pair of glass members and applying pressure while heating them. The heating temperature is preferably 60°C or higher and 150°C or lower, and more preferably 70°C or higher and 140°C or lower. In addition, the pressure is preferably 0.4 MPa or more and 1.5 MPa or less, and more preferably 0.5 MPa or more and 1.3 MPa or less. Note that the pressure here is the absolute pressure. Also, examples of the thermocompression bonding include a method using an autoclave and a method using a heating press, but it is preferable to carry out the thermocompression bonding using an autoclave.

In the production of the above laminated glass, after disposing the interlayer film, the plurality of resin films, or the like between the first and second laminated glass members, and before the thermocompression bonding, the air remaining between the pair of laminated glass members may be degassed, if required. The method for degassing is not particularly limited, but it may be carried out by passing the materials through a pressing roll or by placing them in a rubber bag and subjecting them to reduced-pressure suction.

Also, temporary adhesion may be carried out prior to the thermocompression bonding. The temporary adhesion may be carried out by, for example, disposing the interlayer film or the plurality of resin films between the pair of laminated glass members and pressing them together by a relatively low pressure while heating if required. The temporary adhesion may be carried out by, for example, a vacuum laminator. In the case of carrying out degassing, the temporary adhesion may be carried out after the degassing or may be carried out at the same time as the degassing.

### Examples

The present invention will be described in further detail with reference to Examples, but the present invention is not limited in any way by these Examples.

Note that the measurement method and evaluation method for each physical property value in the present invention are as follows.

### <Glass transition temperature (Tg)>

The interlayer films (first layers) obtained in Examples and Comparative Examples were cut into a length of 10 mm and a width of 5 mm, and the viscoelasticity was measured using a dynamic viscoelasticity measuring device (manufactured by IT Keisoku Seigyo Co., Ltd., product name "DVA-200") under the measurement conditions below. Peak temperatures of the loss tangent tan δ obtained from the results of the viscoelasticity measurement were read. The first peak temperature counted from the low temperature side in the temperature region of -50 to 150°C was defined as the glass transition temperature (Tg).

(Measurement conditions)
deformation mode: shear mode, measurement temperature: -50°C to 200°C, temperature increasing rate: 5°C/min, measurement frequency: 1 Hz, strain: 1%

### <Amount of modification, degree of acetalization, degree of acetylation, and amount of hydroxy groups>

The polyvinyl acetal-based resin was dissolved in chloroform-d and measured using 1H-NMR (nuclear magnetic resonance spectrum), and the above properties were determined by analyzing the molar rate of each unit.

### <Adhesiveness (to PC)>

An interlayer film sized to a length of 15 mm and a width of 15 mm was prepared, and furthermore, two sheets of polycarbonate plate glass with a thickness of 2 mm, a length of 25 mm, and a width of 100 mm in accordance with JIS K6735 were prepared. The two sheets of polycarbonate plate glass were disposed so that their longitudinal directions were perpendicular to each other, and they were overlapped crosswise via the interlayer film.

Thereafter, using a spacer of the same thickness as the interlayer film so that the thickness of the interlayer film was constant, the two sheets of polycarbonate plate glass that had been overlapped via the interlayer film were temporarily compression-bonded for 3 minutes under conditions of 80°C or 100°C and 0.1 MPa in a vacuum laminator. After that, the two sheets of polycarbonate plate glass that had been temporarily compression-bonded were subjected to final compression-bonding for additional 1 hour under conditions of 80°C or 100°C and 0.5 MPa to obtain a laminated glass sample.

A cross peeling test was carried out on the obtained laminated glass sample. Specifically, the maximum load (N) was measured when the laminated glass sample was peeled off in a direction perpendicular to the adhesive surface at a speed of 10 mm/min under an environment with a temperature of 23°C. Details of the cross peeling test are as described in the specification. This maximum load (N) was defined as the adhesive force and evaluated based on the following criteria.

### (Evaluation criteria)

AA: The maximum load is 200 N or more.

A: The maximum load is 100 N or more and less than 200 N.

A⁻: The maximum load is 80 N or more and less than 100 N.

B: The maximum load is less than 80 N.

### <Adhesiveness (to acryl)>

A laminated glass sample was fabricated in the same manner with two sheets of methacrylate plate glass via the interlayer film, except that the Comoglas (Part No. CGP) methacrylate plate glass manufactured by Kuraray Co., Ltd. was used instead of the polycarbonate plate glass, and the maximum load (N) was measured by the same approaches. This maximum load (N) was defined as the adhesive force, and was evaluated based on the above evaluation criteria. Note that the laminated glass sample evaluated was one that had been compression-bonded (temporary compression-bonding and final bonding) at 100°C.

### <Adhesiveness (to PET)>

A laminated glass sample was fabricated in the same manner with two sheets of PET plate glass via the interlayer film, except that the PET-6010 (Part No. 6010) PET plate glass manufactured by C.I. TAKIRON Corporation was used instead of the polycarbonate plate glass, and the maximum load (N) was measured by the same approaches. This maximum load (N) was defined as the adhesive force, and was evaluated based on the above evaluation criteria. Note that the laminated glass sample evaluated was one that had been compression-bonded (temporary compression-bonding and final bonding) at 80°C.

### < Corrodibility>

An interlayer film sized to 25 mm and a width of 50 mm was prepared, and furthermore, two sheets of polycarbonate plate glass with a thickness of 2 mm, a length of 25 mm, and a width of 50 mm in accordance with JIS K6735 were prepared. The polycarbonate plate glass was heated at 80°C overnight (24 hours) to dry the moisture contained in the polycarbonate plate glass. Next, the two sheets of polycarbonate plate glass were overlapped via the interlayer film.

Thereafter, the polycarbonate plate glass that had been overlapped via the interlayer film was temporarily compression-bonded for 3 minutes under conditions of 80°C and 0.1 MPa. The polycarbonate plate glass that had been temporarily compression-bonded was subjected to final compression-bonding for additional 1 hour under conditions of 80°C and 0.5 MPa to obtain a laminated glass sample.

The obtained laminated glass sample was heated in a thermostatic chamber at 100°C for 10 days (240 hours). The laminated glass sample after heating was returned to ordinary temperature (23°C), and the total light transmittance was measured in accordance with JIS R3211 (1998) using a spectrophotometer ("U-4100" manufactured by Hitachi High-Tech Corporation). The obtained total light transmittance was evaluated based on the following evaluation criteria.

### (Evaluation criteria)

AA: The total light transmittance is 85% or more.

A: The total light transmittance is 80% or more and less than 85%.

B: The total light transmittance is less than 80%.

### (Example 1)

In a 500-mL separable flask that had been dried under a stream of nitrogen, 300 g of THF and 30 g of a polyvinyl butyral (average degree of polymerization: 830, amount of hydroxy groups: 33 mol%, degree of acetalization: 65 mol%, unmodified polyvinyl butyral, PVB1) were charged, and the polyvinyl butyral was dissolved by stirring with stirring blades at 65°C.

To this solution, 30 g of octadecyl isocyanate was added as the modifying agent and the mixture was stirred for 10 minutes. The solution was taken out of the separable flask and poured into an aluminum pad on which a PET release film (product name "PET50D1-C", manufactured by Nippa Corporation) was laid with the release treated side facing up, and then heated in an oven at 130°C for 2 hours to allow a reaction, resulting in a film composed of a polyvinyl acetal-based resin having the functional group of formula (1-1). The obtained polyvinyl acetal-based resin was subjected to press molding at a temperature of 160°C and a pressure of 20 MPa to obtain a resin film (interlayer film) with a thickness of 800 µm. When the obtained interlayer film was measured by an infrared spectrophotometer (IR), progress of the reaction was confirmed by disappearance of the peak of the isocyanate group (wavenumber: 2260 cm⁻¹).

### (Example 2)

The process was performed in the same manner as in Example 1, except that the polyvinyl butyral used as a raw material was changed to PVB2 (average degree of polymerization: 1700, amount of hydroxy groups: 33 mol%, degree of acetalization: 66 mol%, unmodified polyvinyl butyral) instead of PVB1.

### (Example 3)

A resin film (interlayer film) was created by the same method as in Example 1, except that the polyvinyl butyral used as a raw material was changed to PVB3 (degree of acetalization: 62 mol%, amount of hydroxy groups: 30 mol%, degree of polymerization: 3200, unmodified polyvinyl butyral) instead of PVB1 and the amount of octadecyl isocyanate added was changed to 21 g.

### (Example 4)

In a 500-mL separable flask that had been dried under a stream of nitrogen, 300 g of THF and 30 g of PVB1 (degree of acetalization: 65 mol%, amount of hydroxy groups: 33 mol%, degree of polymerization: 830, unmodified polyvinyl butyral) were charged, and PVB1 was dissolved by increasing the temperature to 65°C while stirring with stirring blades. To this solution, 15.9 g of pyridine and 16.3 g of 2-ethylhexanoyl chloride were added, and a reaction was carried out at 65°C for 3 hours. Thereafter, the reaction solution was collected, the reaction solution was washed three times with a mixed solvent of water and methanol (mass rate of 1:1), and then dried to obtain a polyvinyl acetal-based resin having the functional group of formula (1-2). The obtained polyvinyl acetal-based resin was subjected to press molding at a temperature of 160 and a pressure of 20 MPa to obtain a resin film (interlayer film) with a thickness of 800 µm.

### (Example 5)

A resin film (interlayer film) was created by the same method as in Example 4, except that the amount of pyridine added was changed to 15.9 g and 22.0 g of lauroyl chloride was used instead of 4.7 g of 2-ethylhexanoyl chloride.

### (Example 6)

A resin film (interlayer film) was created by the same method as in Example 4, except that the amount of pyridine added was changed to 17.0 g and 23.5 g of lauroyl chloride was used instead of 4.7 g of 2-ethylhexanoyl chloride.

### (Example 7)

A resin film (interlayer film) was created by the same method as in Example 4, except that 27.6 g of palmitoyl chloride was used instead of 4.7 g of 2-ethylhexanoyl chloride.

### (Example 8)

### [Synthesis of ethylene oxide-modified polyvinyl alcohol]

In a flask equipped with a stirrer, a thermometer, a dropping funnel, and a reflux condenser, 1000 parts by mass of vinyl acetate, 320 parts by mass of a polyoxyethylene monovinyl ether with an average repeating unit m = 10, and 300 parts by mass of methanol were added, and after carrying out a nitrogen purge in the system, the temperature was increased to 60°C. To this system, 1.1 parts by mass of 2,2-azobisisobutyronitrile was added to initiate polymerization. The polymerization was terminated 5 hours after the initiation of the polymerization. The solid concentration in the system at the time of polymerization termination was 53% by mass, and the polymerization yield was 65% by mass with respect to the entire monomers. After removing unreacted monomers under reduced pressure, a 40 mass% methanol solution of the copolymer was obtained. The obtained copolymer was confirmed to contain 96.0 mol% of vinyl acetate units and 4.0 mol% of ethylene oxide-containing alkyl vinyl ether units from the quantification of unreacted monomers.

While stirring 100 parts by mass of the obtained methanol solution of the copolymer at 40°C, 2.0 parts by mass of a 3 mass% NaOH methanol solution was added, and the mixture was mixed well and then left to stand. After 2 hours, the solidified polymer was ground in a grinder, washed with methanol, and then dried to obtain polymer powder (ethylene oxide-modified polyvinyl alcohol). The ethylene oxide-modified polyvinyl alcohol had a degree of saponification of 90.1 mol%, an amount of ethylene oxide units of 4.0 mol%, and a degree of polymerization of 700.

### [Preparation of polyvinyl butyral (PVB4)]

280 g of the obtained polymer powder was added to 2100 g of pure water, and dissolved by stirring at a temperature of 90°C for about 2 hours. The solution was cooled to 40°C, 160 parts by mass of hydrochloric acid with a concentration of 35 mass% and 150 parts by mass of n-butyraldehyde were added, the liquid temperature was lowered to 20°C, an acetalization reaction was carried out while retaining the temperature, and the reaction product was precipitated. Thereafter, the reaction was completed while retaining the liquid temperature at 40°C for 3 hours, and after passing through neutralization, washing with water, and drying by ordinary methods, white powder of a polyvinyl acetal-based resin (PVB4) was obtained.

### [Fabrication of interlayer film]

The obtained polyvinyl acetal-based resin (PVB4) was subjected to press molding in the same manner as in Example 1 to obtain a resin film (interlayer film) with a thickness of 800 µm.

### (Example 9)

A resin film (interlayer film) was created by the same method as in Example 8, except that the amount of the hydrochloric acid with a concentration of 35 mass% was changed to 135 parts by mass and the amount of n-butyraldehyde was changed to 130 parts by mass at the time of preparing the polyvinyl butyral. Note that the polyvinyl acetal-based resin fabricated in Example 9 is referred to as PVB5.

### (Example 10)

A resin film (interlayer film) was created by the same method as in Example 8, except that the amount of the 3 mass% NaOH methanol solution at the time of synthesis of the ethylene oxide-modified polyvinyl alcohol was changed to 6.2 parts by mass. Note that the polyvinyl acetal-based resin fabricated in Example 10 is referred to as PVB6.

### (Example 11)

In a 500-mL separable flask that had been dried under a stream of nitrogen, 300 g of pyridine and 30 g of PVB3 (degree of acetalization: 62 mol%, amount of hydroxy groups: 30 mol%, degree of polymerization: 3200) as a raw material polyvinyl butyral were charged, and PVB3 was dissolved by stirring with stirring blades. Thereafter, 45.6 molar equivalent amounts of acetic anhydride was added, and the mixture was stirred under an environment of 80°C for 4 hours. After removing pyridine under reduced pressure, the reaction product was washed three times with water and dried to obtain the target product (polyvinyl butyral).

100 parts by mass of the obtained polyvinyl butyral and 10 parts by mass of triethylene glycol di-2-ethylhexanoate (3GO), which is a plasticizer, were thoroughly kneaded at the proportion shown in Table 1, thereby obtaining a resin composition, which was then subjected to press molding to obtain a resin film (interlayer film) with a thickness of 800 µm.

### (Comparative Examples 1 and 2)

PVB2 or PVB3, which was used as the raw material polyvinyl acetal resin in Examples, and 3GO as a plasticizer were thoroughly kneaded at the proportion shown in Table 1, thereby obtaining a resin composition. The resin composition was subjected to press molding to obtain a resin film (interlayer film) with a thickness of 800 µm.

### (Comparative Example 3)

A resin film (interlayer film) was fabricated in the same manner as in Example 9, except that the plasticizer (3GO) was not added.

### (Comparative Example 4)

A resin film (interlayer film) was created by the same method as in Example 4, except that the amount of pyridine added was changed to 4.5 g and the amount of 2-ethylhexanoyl chloride added was changed to 4.7 g.

**[Table 1]**

| | | | | Example | | | | | | | | | | | **Comparative Example** | | | |
|---|---|---|---|---|---|---|---|---|---|---|---|---|---|---|---|---|---|---|
| | **Raw material PVB** | **Degree of polymerization of resin** | **Type of modifying agent** | 1 | 2 | 3 | 4 | 5 | 6 | 7 | 8 | 9 | 10 | 11 | 1 | 2 | 3 | 4 |
| **Resin** (**parts by mass)** | PVB1 | 830 | **C18 isocyanate** | 100 | | | | | | | | | | | | | | |
| | PVB2 | 1700 | | | 100 | | | | | | | | | | | | | |
| | PVB3 | 3200 | | | | 100 | | | | | | | | | | | | |
| | PVB1 | 830 | **C8 branched chloride** | | | | 100 | | | | | | | | | | | 100 |
| | PUB1 | 830 | **C12 chloride** | | | | | 100 | 100 | | | | | | | | | |
| | PUB1 | 830 | **C16 chloride** | | | | | | | 100 | | | | | | | | |
| | **PVB4 *** | 700 | Ethylene oxide (m = 10) | | | | | | | | 100 | | | | | | | |
| | **PVB5*** | 700 | | | | | | | | | | 100 | | | | | | |
| | **PVB6*** | 690 | | | | | | | | | | | 100 | | | | | |
| | PVB2 | 1700 | None | | | | | | | | | | | | 100 | | | |
| | PVB3 | 3200 | None | | | | | | | | | | | | | 100 | | |
| | PVB3 | 3200 | None (reacetylation) | | | | | | | | | | | 100 | | | 100 | |
| **Plasticizer (parts by mass)** | 3GO | | | | | | | | | | | | | 10 | 40 | 10 | | |
| **Interlayer film** | **Amount of PVB constituent units** | Acetal | mol | 65 | 66 | 62 | 65 | 65 | 65 | 65 | 74 | 65 | 73 | 62 | 66 | 62 | 62 | 65 |
| | | Acetyl | mol | 1 | 1 | 12 | 1 | 1 | 1 | 1 | 10 | 1 | 1 | 38 | 1 | 12 | 38 | 1 |
| | | **Amount of modification** | mol | 21 | 21 | 16 | 17 | 11 | 17 | 11 | 4 | 4 | 4 | - | - | - | - | 4 |
| | | **Hydroxy group** | mol | 13 | 12 | 10 | 17 | 23 | 17 | 23 | 12 | 30 | 22 | 0 | 33 | 26 | 0 | 30 |
| | Tg | **DMA** | °C | 38 | 43 | 34 | 40 | 39 | 22 | 43 | 43 | 46 | 40 | 44 | 25 | 54 | 56 | 53 |
| | **Staining properties (total light** transmittance) | 100°C 240 h | % | 88 | 85 | 87 | 89 | 89 | 89 | 88 | 88 | 87 | 88 | 89 | 71 | 89 | 89 | 89 |
| | | | Judgment | AA | AA | AA | AA | AA | AA | AA | AA | AA | AA | AA | B | AA | AA | AA |
| | Adhesive force (to PC) | Compression-**bonding at 80°C** | Judgment | A | A | AA | A | A | AA | A | A- | A- | A | A | B | B | B | B |
| | | Compression-bonding at **100°C** | Judgment | A | A | AA | A | AA | AA | AA | AA | A | AA | AA | B | B | A- | B |
| | **Adhesive force** (to acryl) | Compression-**bonding at 100°C** | Judgment | A- | A- | A- | A- | A- | A- | A- | AA | AA | AA | A- | B | B | B | B |
| | **Adhesive force** (to PET) | Compression-**bonding at 80°C** | Judgment | - | - | - | - | - | - | - | A | A | A | - | B | B | B | B |

| | | | | | | | | | | | | | | | | | | |
|---|---|---|---|---|---|---|---|---|---|---|---|---|---|---|---|---|---|---|
| * Abbreviations in Table 1 are as follows. C18 isocyanate: n-octadecyl isocyanate C8 branched chloride: 2-ethylhexanoyl chloride C12 chloride: lauroyl chloride C16 chloride: palmitoyl chloride * PVB4 to PVB6 means that the polyvinyl acetal-based resins contained in the interlayer films are PVB4 to PVB6. | | | | | | | | | | | | | | | | | | |

In each of the above Examples, since at least one layer (first layer) in the interlayer film contains a polyvinyl acetal-based resin, the first layer does not contain any plasticizer, or even if it does, in an amount of 15 parts by mass or less, and the first layer has a glass transition temperature of 45°C or lower, even after heating for a long period of time, good adhesiveness of the interlayer film to the polycarbonate plate was achieved while preventing corrosion of the polycarbonate plate by the first layer.

In contrast, in each of the Comparative Examples, since the glass transition temperature exceeded 45°C or the content of the plasticizer was larger than 15 parts by mass, it was not possible to achieve good adhesiveness to the polycarbonate plate while preventing corrosion of the polycarbonate plate by the interlayer film.

### Reference Signs List

- 30A, 30B, 30C: Interlayer film for laminated glass
- 31, 31A, 31B: First layer
- 32: Second layer
- 41: First laminated glass member
- 42: Second laminated glass member

## Claims

1. An interlayer film for laminated glass, comprising a first layer containing a polyvinyl acetal-based resin, the first layer containing no plasticizer or containing a plasticizer in an amount of 15 parts by mass or less based on 100 parts by mass of a resin contained in the first layer, and the first layer having a glass transition temperature (Tg) of 50°C or lower.

2. The interlayer film for laminated glass according to claim 1, wherein the first layer contains no plasticizer or contains a plasticizer in an amount of 10 parts by mass or less based on 100 parts by mass of a resin.

3. The interlayer film for laminated glass according to claim 1 or 2, wherein the interlayer film is used for a laminated glass in which at least any of laminated glass members is organic glass.

4. The interlayer film for laminated glass according to any one of claims 1 to 3, wherein an adhesive force of a laminated glass sample obtained by compression-bonding a pair of polycarbonate plate glass in accordance with JIS K6735 at 100°C via the interlayer film for laminated glass is 100 N/225 mm² or more.

5. The interlayer film for laminated glass according to any one of claims 1 to 4, wherein an adhesive force of a laminated glass sample obtained by compression-bonding a pair of methacrylate plate glass at 100°C via the interlayer film for laminated glass is 80 N/225 mm² or more.

6. The interlayer film for laminated glass according to any one of claims 1 to 5, wherein an adhesive force of a laminated glass sample obtained by compression-bonding a pair of PET plate glass at 80°C via the interlayer film for laminated glass is 80 N/225 mm² or more.

7. The interlayer film for laminated glass according to any one of claims 1 to 6, wherein the first layer constitutes an outermost surface of the interlayer film for laminated glass.

8. The interlayer film for laminated glass according to any one of claims 1 to 7, wherein the polyvinyl acetal-based resin has a structure other than an acetal group, an acetyl group, and a hydroxy group as a side chain.

9. The interlayer film for laminated glass according to claim 8, wherein the structure other than an acetal group, an acetyl group, and a hydroxy group is linked to a main chain via any linking group selected from the group consisting of an ester bond, an ether bond, -CH₂O-, and a urethane bond.

10. A laminated glass comprising the interlayer film for laminated glass according to any one of claims 1 to 9 and first and second laminated glass members, wherein the interlayer film for laminated glass is disposed between the first and second laminated glass members.

11. The laminated glass according to claim 10, wherein at least either of the first and second laminated glass members is organic glass.
